# EUROPÄISCHE PATENTSCHRIFT

(11) **EP 3 766 391 B1**
(45) Veröffentlichungstag und Bekanntmachung des Hinweises auf die Patenterteilung: **16.02.2022**
(21) Anmeldenummer: 20181822.6
(22) Anmeldetag: 24.06.2020
(51) Int. Cl.: A47J 31/02, A47J 31/06

(54) **VORRICHTUNG ZUR ZUBEREITUNG VON KAFFEE**
DEVICE FOR PREPARING COFFEE
DISPOSITIF DE PRÉPARATION DU CAFÉ

(30) Priorität: 16.07.2019 DE 202019103927 U
(43) Veröffentlichungstag der Anmeldung: 20.01.2021
(73) Patentinhaber: Melitta Europa GmbH & Co. KG, 32427 Minden (DE)
(72) Erfinder: SACHTLEBEN, Andreas, 32427 Minden (DE)
(74) Vertreter: Dantz, Jan Henning

(56) Entgegenhaltungen:
- DE-A1- 2 625 650
- DE-T2- 69 410 524
- DE-U1-202016 002 518
- DE-U1-202017 100 295
- DE-U1-202018 106 577

## Beschreibung

Die vorliegende Erfindung betrifft eine Vorrichtung zur Zubereitung von Kaffee nach dem Oberbegriff des Anspruches 1.

Für automatische Kaffeemaschinen ist aus der EP 2 700 337 B1 ein Filterhalter bekannt, der an einem Ablauf ein Verschlussventil aufweist. Wenn ein Behälter, wie eine Glaskanne, in die Kaffeemaschine eingestellt wird, bewegt ein Deckel an dem Behälter das Ventil über einen Hebel nach oben, so dass das Ventil geöffnet wird. Solche Ventile sollen ein Abtropfen nach der Entnahme des Gefäßes verhindern.

Zum manuellen Zubereiten von Kaffee ist aus der EP 3 289 935 A1 ein Filtergefäß bekannt, bei dem über zwei voneinander beabstandete Ablauföffnungen Kaffee in ein Gefäß eingefüllt werden kann. Die Ablauföffnungen sind nicht verschließbar, und nach der Zubereitung von Kaffee muss das Filtergefäß somit auf ein weiteres Gefäß gestellt werden, um eine Verunreinigung durch Nachtropfen aus dem Filtergefäß zu vermeiden.

Die DE 10 2018 113 016 offenbart eine Vorrichtung zur Zubereitung von Kaffee, bei der ein Filtergefäß auf einem Stützelement mit einem Auffangelement abstellbar ist. Zum Auffangen der Restflüssigkeit aus dem Filtergefäß kann das Filtergefäß relativ zu dem Auffangelement gedreht werden, damit nachtropfende Flüssigkeit in dem Auffanggefäß aufgefangen wird. Vergisst der Benutzer ein entsprechendes Verstellen, kommt es zu Verunreinigungen.

DE 20 2017 100 295 offenbart eine Filterkaffeemaschine bei der an einem Filterträger eines Gehäuses an eine über ein Betätigungseinrichtung manuell schaltbare Tropf-Stopp-Vorrichtung vorgesehen ist.

Es ist daher Aufgabe der vorliegenden Erfindung, eine Vorrichtung zur Zubereitung von Kaffee zu schaffen, die ein einfaches Auffangen von Restflüssigkeit an einem Filterhalter ermöglicht.

Diese Aufgabe wird mit einer Vorrichtung zur Zubereitung von Kaffee mit den Merkmalen des Anspruches 1 gelöst.

Bei der erfindungsgemäßen Vorrichtung ist an dem Filterhalter ein Betätigungselement für das Verschlusselement vorgesehen, mittels dem das Verschlusselement unabhängig von dem Gefäß zwischen einer geöffneten Position und einer geschlossenen Position bewegbar ist. Dadurch kann der Benutzer das Betätigungselement manuell zwischen einer geschlossenen Position und einer geöffneten Position schalten, so dass keine Bewegung des ganzen Filterhalters notwendig ist, um den Brühvorgang abzubrechen und ein Nachtropfen über ein Verstellen des Verschlusselementes zu verhindern. Eine Bewegung des Verschlusselementes unabhängig von dem Gefäß ist dabei so zu verstehen, dass das Verschlusselement nicht über ein Gefäß oder einen Deckel an dem Gefäß bewegt wird, sondern durch ein separates Betätigungselement, das insbesondere an dem Filterhalter oder dem Halter vorgesehen ist.

Vorzugsweise ist über das Betätigungselement mindestens ein Ventilkörper an einer Ablauföffnung des Ablaufes bewegbar. Der Ventilkörper kann über das Betätigungselement von einer geschlossenen Position in eine geöffnete Position und zurückbewegt werden. Das Betätigungselement ist erfindungsgemäß verschiebbar oder verschwenkbar an einem Gehäuse des Filterhalters gelagert. Dadurch lässt sich das Betätigungselement einfach bedienen, wobei zur besseren Erkennung der geöffneten und der geschlossenen Position das Verschlusselement in diesen beiden Positionen verrastbar sein kann. Hierfür kann ein Federelement vorgesehen sein, mittels dem das Verschlusselement in die geschlossene Position vorgespannt ist, so dass das Federelement einen Rastvorgang unterstützt.

In einer bevorzugten Ausgestaltung sind an dem Filterhalter zwei voneinander beabstandete Ablauföffnungen vorgesehen, die jeweils über einen Ventilkörper verschließbar sind. Es ist natürlich auch möglich, nur eine einzige Ablauföffnung oder mehr als zwei Ablauföffnungen vorzusehen, wobei jede Ablauföffnung über einen Ventilkörper verschlossen werden kann. Bei der Vorsehung von mehreren Ablauföffnungen, insbesondere zwei Ablauföffnungen, kann an der Verschlussvorrichtung ein Verbindungselement vorgesehen sein, mittels dem die Ventilkörper gleichzeitig geöffnet und geschlossen werden können. Dadurch kann über das Betätigungselement gewährleistet werden, dass sämtliche Ablauföffnungen geöffnet oder geschlossen werden. Das Verbindungselement kann dabei einen Steg aufweisen, der durch das Betätigungselement gegen die Kraft eines Federelementes verschiebbar ist.

Vorzugsweise sind integral mit dem Verbindungselement zum Verbinden der Ventilkörper zwei Hülsen ausgebildet, die unter den beiden Ablauföffnungen an dem Filterhalter angeordnet sind, so dass beim Zubereiten von Kaffee der Kaffee durch die Hülsen nach unten strömen kann. Integral mit einer Hülse kann jeweils ein Ventilkörper verbunden sein. Die Ventilkörper sind dabei zusammen in vertikale Richtung bewegbar, um von einer geöffneten in eine geschlossene Position und zurück bewegt zu werden. Die Führung des Verschlussmittels kann dabei über Führungsmittel erfolgen, insbesondere Hülsen oder Gleitelemente, die um die beiden Hülsen angeordnet sind.

Für eine einfache Bedienung kann die Vorrichtung als Betätigungselement einen Drehknopf aufweisen. An dem Drehknopf oder neben dem Drehknopf können Markierungen vorgesehen sein, um dem Benutzer zu signalisieren, ob sich der Filterhalter in einer geöffneten oder geschlossenen Position befindet.

Wenn das Betätigungselement als Drehknopf ausgebildet ist, kann an einer Achse des Drehknopfes ein Exzenter oder ein hervorstehender Nocken angeordnet sein, mittels dem das Verschlusselement bewegbar ist. Dadurch kann mit wenigen Bauteilen ein erfindungsgemäßes Verschlusselement bereitgestellt werden.

Der Halter umgibt den Filterhalter vorzugsweise ringförmig, wobei an dem Halter mindestens ein elastisches Auflageelement und zusätzlich oder alternativ ein elastischer Stützring für den Filterhalter vorgesehen sein kann. Dadurch wird eine Geräuschentwicklung beim Einsetzen des Filterhalters reduziert und der Filterhalter wird im Halter immer in gleicher Weise oberhalb des Gefäßes zentriert. Der Filterhalter kann erfindungsgemäß einfach aus dem Halter entnommen und dann gereinigt werden.

Die erfindungsgemäße Vorrichtung wird insbesondere zur manuellen Zubereitung von Kaffee eingesetzt, indem der Benutzer selbst heißes Wasser in den Filterhalter eingießt. Optional kann die Vorrichtung auch bei einer Kaffeemaschine eingesetzt werden, bei der die Wasserzufuhr automatisch erfolgt.

Die Erfindung wird nachfolgend anhand eines Ausführungsbeispiels mit Bezug auf die beigefügten Zeichnungen näher erläutert. Es zeigen:
- Figur 1: eine Ansicht einer erfindungsgemäßen Vorrichtung zur Zubereitung von Kaffee;
- Figur 2: eine Explosionsdarstellung des Filterhalters der Figur 1;
- Figur 3: eine Ansicht des Filterhalters der Vorrichtung der Figur 1;
- Figuren 4A und 4B: zwei Ansichten des Filterhalters der Figur 3 im Schnitt;
- Figuren 5A und 5B: zwei Detailansichten des Filterhalters der Figur 4 im Bereich der Verschlussvorrichtung;
- Figuren 6A bis 6C: mehrere Ansichten der Verschlussvorrichtung des Filterhalters ohne das umgebende Gehäuse;
- Figuren 7A und 7B: zwei Ansichten des Filterhalters der Figur 4 in einer geöffneten Position, und
- Figuren 8A bis 8C: mehrere Ansichten des Halters der Vorrichtung der Figur 1.

Eine Vorrichtung 1 zur Zubereitung von Kaffee umfasst einen Filterhalter 2, der lose in einen Halter 3 eingesteckt ist. Der Halter 3 umgibt den Filterhalter 2 ringförmig und ist über Pfosten 4 abgestützt, die an einem Boden 5 oder einer Basis fixiert sind. Auf dem Boden 5 ist ein Gefäß 6, wie eine Kanne, abgestellt, die an der Oberseite eine Öffnung zum Einfüllen von gebrühtem Kaffee aufweist.

An dem Filterhalter 2 ist im unteren Bereich ein Gehäuse 7 mit einem Ablauf 11 angeordnet, durch den der zubereitete Kaffee abströmen kann. An dem Gehäuse 7 ist ein Betätigungselement 8 in Form eines Drehknopfes vorgesehen, mittels dem ein Ablauf an dem Filterhalter 2 manuell geöffnet und geschlossen werden kann.

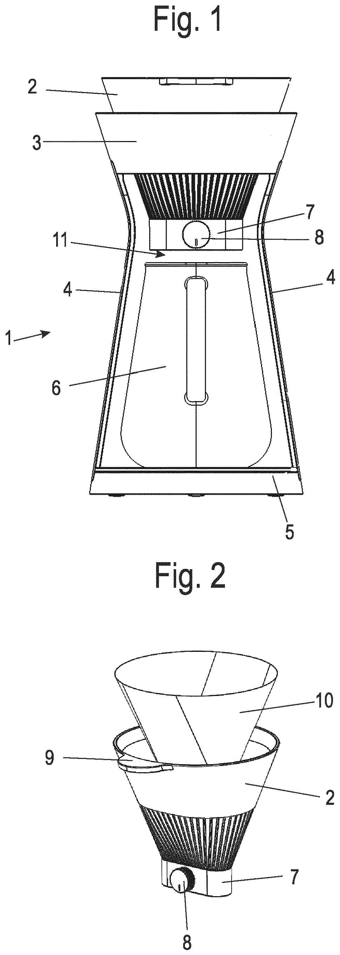

In Figur 2 ist der Filterhalter 2 mit einem Filtereinsatz 10 gezeigt, insbesondere einem Filterpapiereinsatz, in den Kaffeemehl eingefüllt werden kann. An dem Filterhalter 2 ist ferner ein hervorstehender Griffabschnitt 9 ausgebildet, mit dem der Filterhalter 2 einfach gegriffen und aus dem Halter 3 entnommen werden kann.

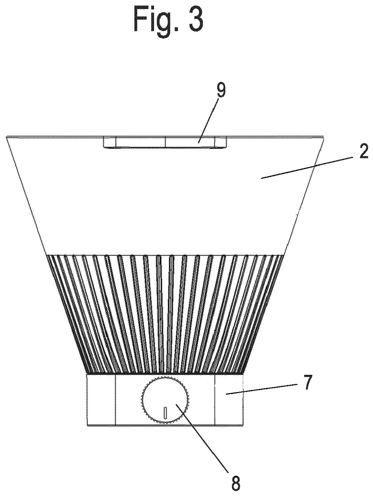

In Figur 3 ist der Filterhalter 2 gezeigt. Der Filterhalter 2 umfasst eine im Wesentlichen kegelstumpfförmige Aufnahme für den Filtereinsatz 10 und im unteren Bereich ein Gehäuse 7, an dem das Betätigungselement 8 drehbar gelagert ist.

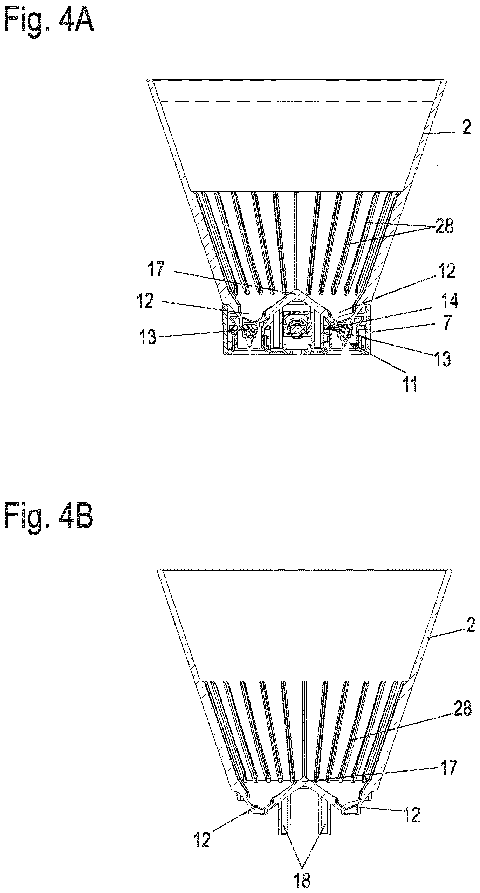

In den Figuren 4A und 4B ist der Filterhalter 2 im Schnitt gezeigt, wobei in Figur 4A an dem Filterhalter 2 im unteren Bereich das Gehäuse 7 montiert ist, an dem ein Verschlusselement 14 zum Öffnen und Schließen eines Ablaufes 11 vorgesehen ist. Das Filtergehäuse 2 umfasst an der Innenseite hervorstehende Rippen 28, die für eine Beabstandung des Filtereinsatzes 10 von einer äußeren Wand des Filterhalters 2 sorgen. Im unteren Bereich besitzt der Filterhalter 2 zwei voneinander beabstandete Ablauföffnungen 12, zwischen denen eine Erhebung 17 ausgebildet ist. Der Filterhalter 2 kann optional auch nur eine einzige Ablauföffnung 12 oder mehr als zwei Ablauföffnungen 12 besitzen. Jede Ablauföffnung 12 ist über einen Ventilkörper 13 verschließbar.

Zur Fixierung des Gehäuses 7 an dem Filterhalter 2 sind unterhalb der Erhebung 17 Hülsen 18 angeformt, in die nicht dargestellte Schrauben eingedreht werden können, die einen Gehäuseboden 19 durchgreifen, um das Gehäuse 7 dauerhaft an dem Filterhalter 2 zu fixieren.

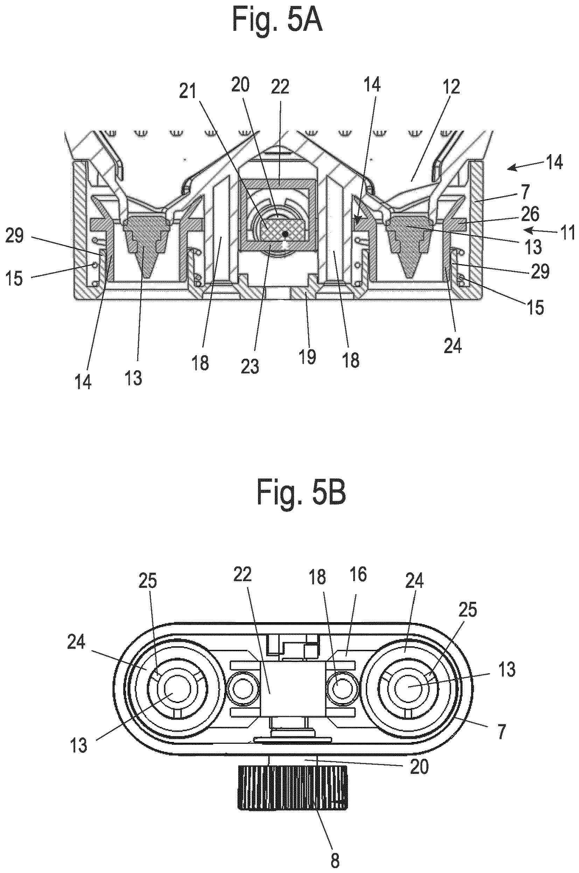

In den Figuren 5A und 5B ist das Verschlusselement 14 des Filterhalters 2 im Detail gezeigt. Das Verschlusselement 14 an dem Ablauf 11 umfasst an jeder Ablauföffnung 12 einen Ventilkörper 13, der über Stege 25 mit einer Hülse 24 verbunden ist. Die Hülse 24 ist über ein Verbindungselement 16 mit einem Kasten 22 verbunden, der mit dem Betätigungselement 8 gekoppelt ist. Jede Hülse 24 besitzt einen nach außen hervorstehenden Rand 26, an dem eine Feder 15 abgestützt ist, die an der gegenüberliegenden Seite an einem Boden des Gehäuses 7 abgestützt ist. Somit wird über jede Feder 15 die Hülse 24 nach oben vorgespannt, so dass auch der Ventilkörper 13 aus elastischem Material gegen den Rand an der Ablauföffnung 12 gedrückt wird. Zur Führung der Bewegung der Hülsen 24 sind an dem Gehäuse 7 Führungsmittel 29 in Form von Führungshülsen vorgesehen, die dafür sorgen, dass die Hülsen 24 im Wesentlichen nur in vertikale Richtung bewegbar sind.

In den Figuren 5A und 5B sind die Ventilkörper 13 in der geschlossenen Position gezeigt, in der diese an dem Rand der Ablauföffnungen 12 anliegen. Die Federn 15 drücken die Hülsen 24 und damit das Verbindungselement 16 nach oben, wobei in dem Kasten 22 ein im Querschnitt rechteckförmiges Drehteil 21 angeordnet ist, das mit seiner Längsseite an einem Boden 23 des Kastens 22 anliegt. Das Drehteil 21 ist an einer Achse 20 drehbar gelagert, an der das Betätigungselement 8 angeordnet ist, wie dies in Figur 5B gezeigt ist.

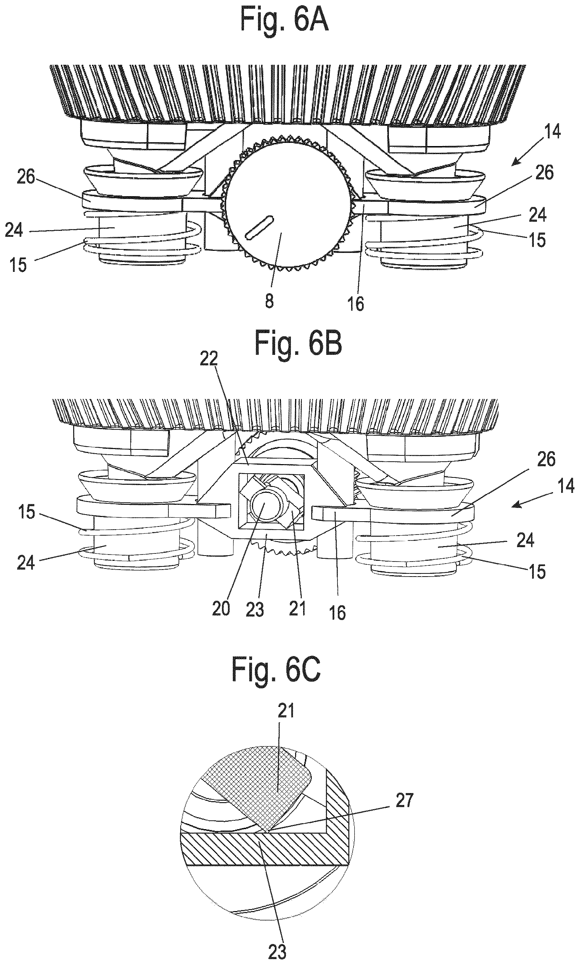

Wenn das Verschlusselement 14 an dem Filterhalter 2 geöffnet werden soll, kann das Betätigungselement 8 gedreht werden, wie dies in den Figuren 6A bis 6C gezeigt ist. Das Betätigungselement 8 wurde entsprechend der Markierung um etwa 45° verstellt, wodurch das im Querschnitt rechteckförmige Drehteil 21 ebenfalls gedreht wurde, so dass eine Kante 27 an dem Drehteil 21 den Boden 23 an dem Kasten 22 gegen die Kraft der Federn 15 nach unten drückt. Dadurch bewegt sich der Kasten 22 zusammen mit dem Verbindungselement 16 und den Ventilkörpern 13 nach unten gegen die Kraft der Federn 15.

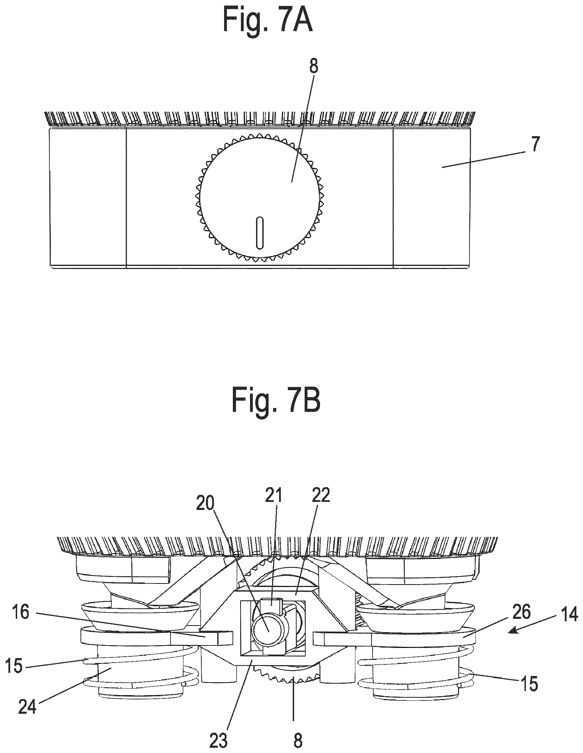

Wird das Betätigungselement 8 nun weitergedreht, wie dies in den Figuren 7A und 7B gezeigt wird, ist eine Öffnungsposition erreicht, in der das Drehteil 21 verrastet wird. Die Kante 27 ist an dem Boden 23 so angeordnet, dass eine Schmalseite des im Querschnitt rechteckförmigen Drehteils 21 an dem Boden 23 zur Anlage kommt. Über das Drehteil 21 befindet sich das Verbindungselement 16 somit eine kleine Wegstrecke tiefer als in der geschlossenen Position, wodurch auch die Ventilkörper 13 nach unten bewegt wurden und die Ablauföffnungen 12 öffnen. In dieser Position kann nun manuell oder automatisch Kaffee gebrüht werden, der dann in dem Gefäß 6 aufgefangen wird. Nach dem Brühvorgang kann der Benutzer das Betätigungselement 8 wieder von der in Figur 7A gezeigten Position drehen, wodurch die Ventilkörper 13 wieder in die Position der Figur 5A gebracht werden.

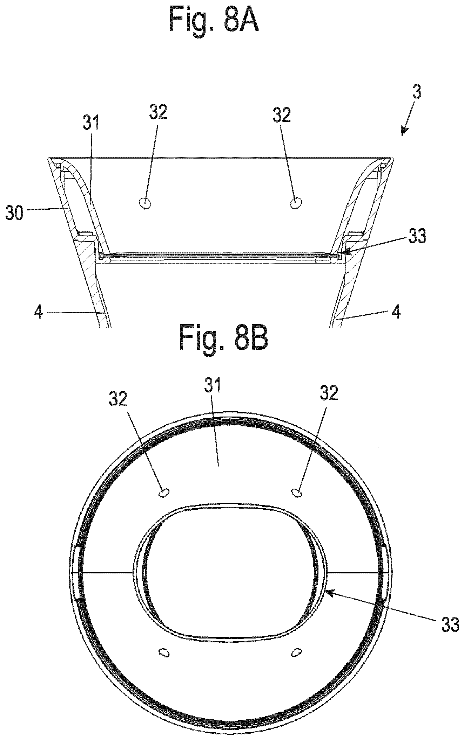

In den Figuren 8A bis 8C ist der Halter 3 der Vorrichtung 1 gezeigt. Der Halter 3 umgibt den Filterhalter 2 ringförmig, wobei der Halter 3 äußere Stützelemente 30 aufweist, die an den Pfosten 4 abgestützt sind, und einen inneren Einsatz 31, der nach oben aufspreizend ausgebildet ist. An dem Einsatz 31 sind über den Umfang verteilt mehrere elastische Auflageelemente 32 angeordnet, die den Einsatz 31 durchgreifen. Am unteren Rand des Halters ist ein elastischer Stützring 33 eingefügt. Dadurch liegt der Filterhalter 2 mit seinen Wänden nicht unmittelbar an dem Einsatz 31 an, sondern an den elastischen Elementen 32 und dem elastischen Stützring 33, was für eine geringe Geräuschentwicklung und eine sichere Zentrierung des Filterhalters oberhalb des Gefäßes 6 sorgt.

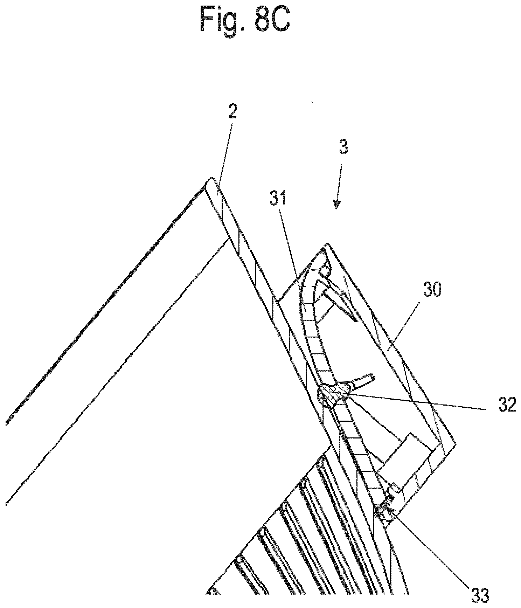

Die elastischen Auflageelemente 32 können gemäß Figur 8C als Stopfen ausgebildet sein, die in Öffnungen an dem Einsatz 31 eingesteckt sind. Statt des dargestellten zweiteiligen Aufbaus mit dem Stützelement 30 und dem Einsatz 31 kann der Halter 3 auch einteilig ausgebildet sein.

### Bezugszeichenliste

- 1: Vorrichtung
- 2: Filterhalter
- 3: Halter
- 4: Pfosten
- 5: Boden
- 6: Gefäß
- 7: Gehäuse
- 8: Betätigungselement
- 9: Griffabschnitt
- 10: Filtereinsatz
- 11: Ablauf
- 12: Ablauföffnung
- 13: Ventilkörper
- 14: Verschlusselement
- 15: Feder
- 16: Verbindungselement
- 17: Erhebung
- 18: Hülse
- 19: Gehäuseboden
- 20: Achse
- 21: Drehteil
- 22: Kasten
- 23: Boden
- 24: Hülse
- 25: Steg
- 26: Rand
- 27: Kante
- 28: Rippen
- 29: Führungsmittel
- 30: Stützelement
- 31: Einsatz
- 32: elastisches Auflageelement
- 33: elastischer Stützring

## Patentansprüche

1. Vorrichtung (1) zur Zubereitung von Kaffee, insbesondere durch manuelles Aufbrühen, umfassend:
a) einen Filterhalter (2) zur Aufnahme eines Filtereinsatzes (10) mit gemahlenem Kaffeemehl;
b) einen Halter (3), in dem der Filterhalter (2) eingesetzt ist;
c) einen unter dem Filterhalter (2) angeordneten Gefäß (6), in das der gebrühte Kaffee einfüllbar ist;
d) einen an dem Filterhalter (2) angeordneten Ablauf (11), und
e) ein an dem Ablauf (11) angeordnetes Verschlusselement (14) zum Öffnen und Schließen des Ablaufes (11),
wobei an dem Filterhalter (2) ein Betätigungselement (8) für das Verschlusselement (14) vorgesehen ist, mittels dem das Verschlusselement (14) unabhängig von dem Gefäß (6) zwischen einer geöffneten Position und einer geschlossenen Position bewegbar ist, **dadurch gekennzeichnet, dass** der Filterhalter (2) aus dem Halter (3) entnehmbar ist und das Betätigungselement (8) verschiebbar oder verschwenkbar an einem Gehäuse (7) des Filterhalters (2) gelagert ist.

2. Vorrichtung nach Anspruch 1, **dadurch gekennzeichnet, dass** über das Betätigungselement (8) mindestens ein Ventilkörper (13) an einer Ablauföffnung (12) des Ablaufes (11) bewegbar ist.

3. Vorrichtung nach Anspruch 1 oder 2, **dadurch gekennzeichnet, dass** das Verschlusselement (14) in der geöffneten Position und der geschlossenen Position verrastbar ist.

4. Vorrichtung nach einem der vorhergehenden Ansprüche, **dadurch gekennzeichnet, dass** ein Federelement (15) vorgesehen ist, mittels dem das Verschlusselement (14) in die geschlossene Position vorgespannt ist.

5. Vorrichtung nach einem der vorhergehenden Ansprüche, **dadurch gekennzeichnet, dass** an dem Filterhalter (2) zwei voneinander beabstandete Ablauföffnungen (12) vorgesehen sind, die jeweils über einen Ventilkörper (13) verschließbar sind.

6. Vorrichtung nach Anspruch 5, **dadurch gekennzeichnet, dass** die Verschlussvorrichtung (14) ein Verbindungselement (16) aufweist, mittels dem die beiden Ventilkörper (13) gleichzeitig geöffnet und geschlossen werden können.

7. Vorrichtung nach Anspruch 6, **dadurch gekennzeichnet, dass** das Verbindungselement (16) einen Steg aufweist, der durch das Betätigungselement (8) gegen die Kraft eines Federelementes (15) verschiebbar ist.

8. Vorrichtung nach Anspruch 6 oder 7, **dadurch gekennzeichnet, dass** das integral mit dem Verbindungselement (16) zwei Hülsen (24) ausgebildet sind, die unter den beiden Ablauföffnungen (12) an dem Filterhalter (2) angeordnet sind.

9. Vorrichtung nach Anspruch 8, **dadurch gekennzeichnet, dass** an einem Gehäuse (7) des Filterhalters (2) Führungsmittel (29) zum Führen der beiden Hülsen (24) ausgebildet sind.

10. Vorrichtung nach einem der vorhergehenden Ansprüche, **dadurch gekennzeichnet, dass** das Betätigungselement (8) als Drehknopf ausgebildet ist.

11. Vorrichtung nach Anspruch 10, **dadurch gekennzeichnet, dass** an der Achse (20) des Drehknopfes (8) ein Exzenter oder ein hervorstehender Nocken (21) angeordnet ist, mittels dem das Verschlusselement (14) bewegbar ist.

12. Vorrichtung nach einem der vorhergehenden Ansprüche, **dadurch gekennzeichnet, dass** der Halter (3) den Filterhalter (2) ringförmig umgibt.

13. Vorrichtung nach Anspruch 12, **dadurch gekennzeichnet, dass** an dem Halter (3) elastische Auflageelemente (32) für den Filterhalter (2) vorgesehen sind.

14. Vorrichtung nach Anspruch 12 oder 13, **dadurch gekennzeichnet, dass** der Filterhalter (2) durch einen elastischen Stützring (33) zentriert im Halter (3) gehalten ist.

## Claims

1. A device (1) for preparing coffee, in particular by manual brewing, comprising:
a) a filter holder (2) for receiving a filter insert (10) with ground coffee;
b) a holder (3) in which the filter holder (2) is inserted;
c) a vessel (6) arranged under the filter holder (2), into which the brewed coffee can be filled;
d) a drain (11) arranged on the filter holder (2), and
e) a closure element (14) arranged on the drain (11) for opening and closing the drain (11),
whereby an actuating element (8) for the closure element (14) is provided on the filter holder (2), by means of which the closure element (14) is movable between an open position and a closed position independently of the vessel (6), **characterized in that** the filter holder (2) can be removed from the holder (3) and the actuating element (8) is displaceably or pivotably mounted on a housing (7) of the filter holder (2).

2. The device according to claim 1, **characterized in that** at least one valve body (13) is movable at a drain hole (12) of the drain (11) via the actuating element (8).

3. The device according to claim 1 or 2, **characterized in that** the closure element (14) is lockable in the open position and the closed position.

4. The device according to one of the preceding claims, **characterized in that** a spring (15) is provided by means of which the closure element (14) is pre-tensioned into the closed position.

5. The device according to one of the preceding claims, **characterized in that** two spaced-apart drain holes (12) are provided on the filter holder (2), each of which can be closed by a valve body (13).

6. The device according to claim 5, **characterized in that** the closure element (14) comprises a connecting element (16) by means of which the two valve bodies (13) can be opened and closed simultaneously.

7. The device according to claim 6, **characterized in that** the connecting element (16) has a web which is displaceable by the actuating element (8) against the force of a spring (15).

8. The device according to claim 6 or 7, **characterized in that** integrally with the connecting element (16) two sleeves (24) are formed, which are arranged under the two drain holes (12) on the filter holder (2).

9. The device according to claim 8, **characterized in that** guide means (29) for guiding the two sleeves (24) are formed on a housing (7) of the filter holder (2).

10. The device according to one of the preceding claims, **characterized in that** the actuating element (8) is designed as a rotary knob.

11. The device according to claim 10, **characterized in that** an eccentric or a projecting cam (21) is arranged on the axis (20) of the rotary knob (8), by means of which the closure element (14) is movable.

12. The device according to one of the preceding claims, **characterized in that** the holder (3) surrounds the filter holder (2) in a ring shape.

13. The device according to claim 12, **characterized in that** elastic support elements (32) for the filter holder (2) are provided on the holder (3).

14. The device according to claim 12 or 13, **characterized in that** the filter holder (2) is held centered in the holder (3) by an elastic support ring (33).

## Revendications

1. Dispositif (1) pour préparer du café, notamment par infusion manuelle comprenant :
a) un support de filtre (2) pour recevoir une garniture de filtre (10) avec de la poudre de café,
b) un support (3) recevant le support de filtre (2),
c) un récipient (6) placé sous le support de filtre (2) et qui reçoit le café infusé,
d) une sortie (11) sur le support de filtre (2), et
e) un élément de fermeture (14) équipant la sortie (11) pour ouvrir et fermer la sortie (11),
- le support de filtre (2) comportant un élément d'actionnement (8) de l'élément de fermeture (14) qui permet de commander l'élément de fermeture (14) indépendamment du récipient (6), entre une position ouverte et une position fermée,
dispositif **caractérisé en ce que**
le support de filtre (2) peut être enlevé du support (3) et l'élément d'actionnement (8) est monté coulissant ou pivotant sur un boîtier (7) du support de filtre (2).

2. Dispositif selon la revendication 1,
**caractérisé en ce que**
l'élément d'actionnement (8) comporte au moins un corps de soupape (13) pour l'orifice (12) de la sortie (11).

3. Dispositif selon la revendication 1 ou 2,
**caractérisé en ce que**
l'élément de fermeture (14) est bloqué en position ouverte et en position fermée.

4. Dispositif selon l'une des revendications précédentes,
**caractérisé en ce que**
il comprend un élément de ressort (15) qui précontraint l'élément de fermeture (14) dans sa position fermée.

5. Dispositif selon l'une des revendications précédentes,
**caractérisé en ce que**
le support de filtre (12) comporte deux orifices de sortie (2) écartés l'un de l'autre et qui se ferment chacun par un corps de soupape (13).

6. Dispositif selon la revendication 5,
**caractérisé en ce que**
le dispositif de fermeture (14) comprend un élément de liaison (16) qui permet d'ouvrir et de fermer simultanément les deux corps de soupape (13).

7. Dispositif selon la revendication 6,
**caractérisé en ce que**
l'élément de liaison (16) comporte une entretoise qui permet de coulisser l'élément d'actionnement (8) contre la force d'un élément de ressort (15).

8. Dispositif selon la revendication 6 ou 7,
**caractérisé en ce que**
deux manchons (24) sont réalisés en une seule pièce avec l'élément de liaison (16), ces manchons étant sous les deux orifices de sortie (12) du support de filtre (2).

9. Dispositif selon la revendication 8,
**caractérisé en ce que**
le boîtier (7) du support de filtre (2) comporte des moyens de guidage (29) pour guider les deux manchons (24).

10. Dispositif selon l'une des revendications précédentes,
**caractérisé en ce que**
l'élément d'actionnement (8) est sous la forme d'un bouton tournant.

11. Dispositif selon la revendication 10,
**caractérisé en ce que**
l'axe (20) du bouton tournant (8) comporte un excentrique ou un bec en saillie (21) qui permet d'actionner l'élément de fermeture (14).

12. Dispositif selon l'une des revendications précédentes,
**caractérisé en ce que**
le support (3) entoure le support de filtre (2) par une forme annulaire.

13. Dispositif selon la revendication 12,
**caractérisé en ce que**
le support (3) comporte des éléments d'appui élastiques (32) pour le support de filtre (2).

14. Dispositif selon la revendication 12 ou 13,
**caractérisé en ce que**
le support de filtre (2) est centré dans le support (3) par une bague d'appui élastique (33).
